# EUROPEAN PATENT SPECIFICATION

(11) **EP 3 026 091 B1**
(45) Date of publication and mention of the grant of the patent: **01.09.2021**
(21) Application number: 14194631.9
(22) Date of filing: 25.11.2014
(51) Int. Cl.: C09J 175/04, C08G 18/48, C08G 18/75, C08G 18/22, C08G 18/76

(54) **Two component sealant based on silane-functional polymers**
Zweikomponentendichtmittel, basierend auf silanfunktionellen Polymeren
Produit d'étanchéité à deux composants, basé sur des polymères à fonction silane

(43) Date of publication of application: 01.06.2016
(73) Proprietor: Sika Technology AG, 6340 Baar (CH)
(72) Inventor: Kunitomo, Takuya, Chigasaki, 254-0053 (JP); Jucker, Barbara, Hiratsuka, 254-0815 (JP); Gagabe, Gene, Fujisawa, 251-0055 (JP)
(74) Representative: Sika Patent Attorneys

(56) References cited:
- EP-A1- 0 676 403
- US-A- 4 645 816
- US-B1- 6 599 354
- None

## Description

### Technical field

The present invention relates to a two-component composition based on silane-modified polyurethanes suitable as joint sealant or adhesive, its manufacture and use and the cured composition.

### Background of the invention

Moisture-curable two-component compositions based on silane-modified (silane-functional) polymers are nowadays increasingly used as elastic adhesives, sealants, or coatings. Compared to purely polyurethane-based two-component compositions which rely on the reaction of toxic isocyanates with amines or alcohols for curing, these silane-functional polymer-based compositions, even though they are often chemically based on polyurethane polymers, have the advantage that they do not contain any more isocyanate groups in significant or even detectable amounts, which is beneficial regarding toxicity and application safety.

Such silane-functional polyurethane polymers are readily available by different synthesis routes, for example by the reaction of isocyanate-functional polyurethane prepolymers with organosilanes which have another functional group able to react with isocyanates, such as aminosilanes or mercaptosilanes. The thus performed functionalization of reactive polymers is also called "endcapping".

This kind of silane-functional polyurethane polymers and their use in adhesives, sealants or coatings are known in the state of the art.

For example, EP 0 676 403 A1 discloses arylaminosiobutyl silanes and their use as endcappers for isocyanate-functional polymers to yield silane-functional polymers and moisture-curable sealant compositions with high elongation and low modulus of elasticity.

Such sealant, adhesive, or coating compositions can be formulated in single or two-component compositions, the latter of which are mixed to the final reactive product shortly before or during application. Compared to single component compositions, the advantage of two-component compositions is typically a long open time in combination with fast through cure, as curing does not only rely on moisture from ambient air. These two properties are easy to combine in a two-component composition which further maintains a long shelf live because the reactive components are stored separately.

Depending on the application, the formulation can be adapted in order to achieve the desired final properties of the cured product. For elastic joint sealants for example, good adhesion and low E-modulus, associated with high elongation at break and rather low tensile strength, is desirable. Such a low modulus sealant is able to compensate for strong movement of the joint, e.g. due to thermal expansion, without breaking, peeling off or damaging the substrate.

However, in the case of two-component compositions based on silane-functional polymers, solutions with good through cure available today still suffer from significant drawbacks especially for joint sealant applications, or they require special, expensive ingredients. Highly reactive polymers used in two-component compositions, e.g. with three hydrolysable silane groups, are often not useful for low E-modulus sealants or suffer from low shelf life and poor performance. Also, the durability of such joint sealants after application is often poor, especially in joints with high movement, e.g. due to high thermal expansion and contraction of the joint substrates. Therefore there is still a demand for a simple, inexpensive two-component solution for joint sealants based on silane-functional polymers, which exhibits all advantages of such systems, like low toxicity, but still allows for fast curing, long shelf life, and excellent properties and durability.

### Summary of the invention

Therefore, the object of the present invention is to provide a two-component composition based on silane-functional polymers which has a low E-modulus, long open time, but fast through curing, and at the same time offers excellent shelf life and in its cured state offers excellent durability.

Surprisingly, this object could be achieved by the two-component composition with the features of independent claim 1.

Such two-component compositions according to the present invention are especially suitable for being used as a low modulus joint sealant, especially in joints with high movement of the substrates. Further advantages of the inventive compositions include the possibility to use undried fillers, low odor of the reactive components and versatility regarding the silane-functional polymer synthesis.

Further aspects of the present invention are object of other independent claims. Preferred embodiments of the present invention are object of the dependent claims.

### Detailed description of the invention

In a first aspect, the object of the present invention is a two-component composition comprising
a) a first component A comprising
   at least one polymer P obtained by the reaction of m equivalents of a secondary aminosilane endcapper E according to formula (I) with one equivalent of an isocyanate-functional polyurethane polymer **PUR** having m isocyanate groups, 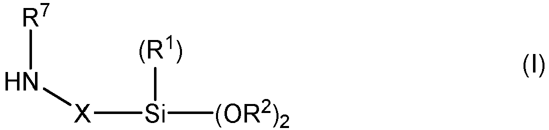 wherein
   radical R¹ represents a linear or branched monovalent hydrocarbon radical having 1 to 5 carbon atoms and which optionally contains one or more C-C-multiple bonds, and/or cycloaliphatic, and/or aromatic moieties;
   radical R² represents an acyl radical or a linear or branched monovalent hydrocarbon radical having 1 to 5 carbon atoms and which optionally contains one or more C-C-multiple bonds, and/or cycloaliphatic, and/or aromatic moieties;
   radical R⁷ represents a linear or branched monovalent hydrocarbon radical having 1 to 20 carbon atoms and which optionally contains one or more heteroatoms and/or C-C-multiple bonds, and/or cycloaliphatic, and/or aromatic moieties;
   X represents a linear or branched monovalent hydrocarbon radical having 1 to 6 carbon atoms and which optionally contains one or more heteroatoms and optionally one or more C-C-multiple bonds, and/or cycloaliphatic, and/or aromatic moieties;
   m stands for a value of 1 to 4;
   and
b) a second component B comprising a catalyst system for catalyzing hydrolysis and/or condensation of silanes;
wherein component A and component B are produced and stored separately and preferably mixed shortly prior to application, and wherein said secondary aminosilane endcapper **E** is obtained by the reaction of an aminosilane **AS** according to formula (II) with a Michael acceptor **M** according to formula (III) or (IIIa) 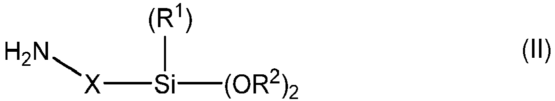 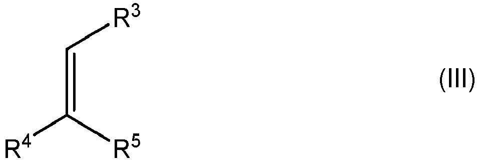 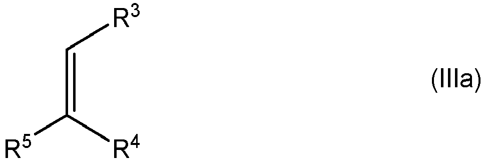 wherein
radical R³ and radical R⁵ both represent an alkyl carboxylate group, preferably a methyl or ethyl carboxylate group;
radical R⁴ represents a hydrogen radical or a radical selected from the group -R⁶, -COOR⁶, -CN, or -NO₂;
radical R⁶ represents a linear or branched monovalent hydrocarbon radical having 1 to 20 carbon atoms.

Substance names beginning with "poly" such as polyol or polyisocyanate in the present document refer to substances that formally contain two or more of the functional groups occurring in their name. The term "polymer" in the present document includes, on the one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

In the present document, the terms "silane" and "organosilane" refer to compounds which, on the one hand, have at least one, usually two or three, alkoxy groups or acyloxy groups bound directly to the silicon atom by Si-O bonds and, on the other hand, at least one organic radical bound directly to the silicon atom by an Si-C bond. Those skilled in the art are also familiar with such silanes as organoalkoxysilanes and/or organoacyloxysilanes.

Accordingly, the term "silane group" refers to the silicon-containing group bound to the organic radical of the silane via the Si-C bond. The silanes and/or their silane groups have the property of undergoing hydrolysis upon contact with moisture. In doing so, organosilanols are formed, i.e., organosilicon compounds containing one or more silanol groups (Si-OH groups) and, for subsequent condensation reactions, organosiloxanes, i.e., organosilicon compounds containing one or more siloxane groups (Si-O-Si groups). The term "silane-functional" denotes compounds containing silane groups. "Silane-functional polymers" are thus polymers containing at least one silane group. Similarly, the term "isocyanate-functional" denotes compounds containing an isocyanate functional group.

Organosilanes, in which the organic radical has an amino group and/or a mercapto group, are referred to as "aminosilanes" and/or "mercaptosilanes". "Primary aminosilanes" are aminosilanes having a primary amino group, i.e., an NH₂ group bound to an organic radical. "Secondary aminosilanes" are aminosilanes having a secondary amino group, i.e., an NH group bound to two organic radicals.

"Molecular weight" is always understood in the present document to refer to the molar mass (in grams per mole) of a molecule. The term "average molecular weight" herein means "average molar mass" Mₙ of an oligomer or polymer and describes the number average molar mass of a mixture of oligomer or polymer molecules, typically measured by gel permeation chromatography (GPC) in THF using a polystyrene standard.

The isocyanate-functional polyurethane polymer **PUR** can be obtained in particular by the reaction of at least one polyol with at least one polyisocyanate.

This reaction can be performed by using known methods, for example by reacting the polyol with the polyisocyanate at temperatures between 50 °C and 100 °C, optionally using a suitable catalyst. However, it is preferred that no silane-condensation catalyst (such as a tin-based catalyst) is used, as this may be disadvantageous for the shelf life of component A of the inventive two-component composition.

In particular the polysiocyanate is dosed in a way that the molar ratio of isocyanate groups of the polyisocyanate to hydroxyl groups of the polyol is greater than 1, i.e. the isocyanate groups are present in molar excess.

This molar excess of isocyanate groups is in particular adjusted such that after reaction of the polyisocyanate with the polyol, the amount of remaining isocyanate groups in the resulting polyurethane polymer **PUR** is between 0.1 and 5 wt.-%, preferably between 0.1 and 2.5 wt.-%, more preferably between 0.2 and 1 wt.-%, based on the weight of the polyurethane polymer **PUR.**

Optionally, the polyurethane polymer **PUR** can be prepared using plasticizers which however do not contain any functional groups that can react with isocyanates.

Preferably the polyurethane polymer **PUR** is prepared resulting in the above-mentioned excess of isocyanate groups compared to hydroxyl groups by using diisocyanates and high molecular weight diols and a molar ratio of NCO : OH of between 1.3 : 1 and 2.2 : 1.

Suitable polyols for the preparation of the isocyanate-functional polyurethane polymer are in particular polyoxyalkylenepolyethylenepolyols, also referred to as polyether polyols, polyester polyols, polycarbonate polyols and mixtures thereof. The most preferred polyols are diols, in particular polyether diols, including polyoxyethylene diols, polyoxypropylene diols or polyoxybutylene diols.

Particularly suitable polyetherpolyols, also referred to as polyoxyalkylenepolyols or oligoetherols, are those which are polymerization products of ethylene oxide, 1,2-propylene oxide, 1,2- or 2,3-butylene oxide, oxethane, tetrahydrofurane or mixtures thereof, optionally polymerized with the aid of an initiator having two or more active hydrogen atoms per molecule, such as, for example, water, ammonia or compounds having a plurality of OH or NH groups, such as, for example, 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of said compounds. Both polyoxyalkylenepolyols which have a low degree of unsaturation (measured according to ASTM D-2849-69 and stated in milliequivalent unsaturation per gram of polyol (meq/g)), prepared, for example, with the aid of so-called double metal cyanide complex catalysts (DMC catalysts), and polyoxyalkylenepolyols having a higher degree of unsaturation, prepared, for example, with the aid of anionic catalysts, such as NaOH, KOH, CsOH or alkali metal alcoholates, may be used.

Polyoxyethylenepolyols and polyoxypropylenepolyols, in particular polyoxyethylenediols, polyoxypropylenediols, polyoxyethylenetriols and polyoxypropylenetriols, are particularly suitable.

Polyoxyalkylenediols or polyoxyalkylenetriols having a degree of unsaturation of less than 0.02 meq/g and having a molecular weight in the range from 1000 to 30000 g/mol and polyoxyethylenediols, polyoxyethylenetriols, polyoxypropylenediols and polyoxypropylenetriols having a molecular weight of from 400 to 30000 g/mol, preferably 3500 to 25000 g/mol, more preferably 4000 to 18000 g/mol, are particularly suitable.

Also particularly suitable are so-called ethylene oxide-terminated ("EO-endcapped", ethylene oxide-endcapped) polyoxypropylenepolyols. The latter are special polyoxypropylenepolyoxyethylenepolyols which are obtained, for example, by further alkoxylating pure polyoxypropylenepolyols, in particular polyoxypropylenediols and -triols, with ethylene oxide after the end of the polypropoxylation reaction and have primary hydroxyl groups as a result. In this case, polyoxypropylenepolyoxyethylenediols and polyoxypropylenepolyoxy-ethylenetriols are preferred.

Further suitable polyols are poly(meth)acrylate polyols.

Polyhydroxy-functional fats and oils, for example natural fats and oils, in particular castor oil, or polyols obtained by chemical modification of natural fats and oils, so-called oleochemical polyols, the epoxypolyesters or epoxypolyethers obtained, for example, by epoxidation of unsaturated oils and subsequent ring opening with carboxylic acids or alcohols, or polyols obtained by hydroformylation and hydrogenation of unsaturated oils are furthermore suitable. These are furthermore polyols which are obtained from natural fats and oils by degradation processes, such as alcoholysis or ozonolysis, and subsequent chemical linkage, for example by transesterification or dimerization, of the degradation products thus obtained or derivatives thereof. Suitable degradation products of natural fats and oils are in particular fatty acids and fatty alcohols and fatty acid esters, in particular the methyl esters (FAME), which can be derivatized, for example, by hydroformylation and hydrogenation to give hydroxy-fatty acid esters.

Furthermore, polyhydrocarbon-polyols, also referred to as oligohydro-carbonols, for example polyhydroxy-functional ethylene-propylene, ethylenebutylene or ethylene-propylene-diene copolymers, as produced, for example, by Kraton Polymers, USA, or polyhydroxy-functional copolymers obtained from dienes, such as 1,3-butadiene or diene mixtures, and vinyl monomers, such as styrene, acrylonitrile or isobutylene, or polyhydroxy-functional polybutadiene polyols, for example those which can be prepared by copolymerization of 1,3-butadiene and allyl alcohol or by oxidation of polybutadiene and can also be hydrogenated, are likewise suitable.

Polyhydroxy-functional acrylonitrile/butadiene copolymers, as can be prepared, for example, from epoxides or amino alcohols and carboxyl-terminated acrylonitrile/butadiene copolymers (commercially available under the name Hypro® CTBN from Emerald Performance Materials, LLC, USA), are furthermore suitable.

Said polyols preferably have an average molecular weight of from 250 to 30000 g/mol, in particular from 1000 to 30000 g/mol, and an average OH functionality in the range from 1.6 to 3. The term "functionality" describes the average number of specific functional groups on one molecule.

Particularly suitable polyols are polyetherpolyols, in particular polyoxyethylenepolyol, polyoxypropylenepolyol and polyoxypropylenepolyoxyethylenepolyol, preferably polyoxyethylenediol, polyoxypropylenediol, polyoxyethylenetriol, polyoxypropylenetriol, polyoxypropylenepolyoxyethylenediol and polyoxypropylenepolyoxyethylenetriol.

In addition to said polyols, small amounts of low molecular weight di- or polyhydric alcohols, such as, for example, 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the above-mentioned di- and polyhydric alcohols, and mixtures of the above-mentioned alcohols can be concomitantly used in the preparation of the isocyanate-functional polyurethane polymer **PUR,** i.e. the polyurethane polymer having isocyanate groups.

Depending on the polyols used and their number of hydroxyl groups per molecule, it is possible to prepare isocyanate-functional polyurethane polymers with 1 or more free terminal isocyanate groups per polymer **PUR.** For the inventive two-component composition it is preferred to prepare polymers **PUR** with in average 1 to 4 isocyanate groups per polymer molecule. Most preferred embodiments have in average 1 to 3 isocyanate groups per polymer **PUR**.

As concerns the polyisocyanate, the present application is not subject to any relevant restrictions. Suitable isocyanates for use in the present application are aliphatic, cycloaliphatic, or aromatic polyisocyanates, in particular diisocyanates, such as for example 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (=isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane), m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene, 2,4- and 2,6-toluene diisocyanate (TDI), 4,4'-, 2,4'- and 2,2'-diphenylmethane diisocyanate (MDI), 1,3- and 1,4-phenylene diisocyanate, 2,3,5,6-tetramethyl-1,4-diisocyanatobenzene, naphthalene 1,5-diisocyanate (NID), 3,3'-dimethyl-4,4'-diisocyanatobiphenyl (TOBI); oligomers and polymers of the abovementioned isocyanates, and any desired mixtures of the abovementioned isocyanates. Preferred diisocyanates in the present application are 2,4- and 2,6-toluene diisocyanate (TDI) and any mixture of these isomers, as well as 4,4'-, 2,4' and 2,2'-diphenylmethandiisocyanate (MDI) and any mixture of these isomers. The isocyanate-terminated polyurethane prepolymers **PUR** are suitably based on the above-mentioned isocyanates.

In the practice of the present application it is particularly preferred that the polyisocyanate is an aliphatic polyisocyanate, and in most preferred embodiments the polyisocyanate is IPDI or a prepolymer containing terminal IPDI residues.

Suitable secondary aminosilane endcappers **E** include all aminosilanes that have a silane group with two hydrolysable substituents and at least one secondary amino group, according to formula (I) 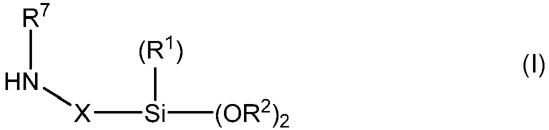 wherein
radicals R¹ ,R², R⁷, and X have the same meaning as described further above.

In a preferred embodiment, radical R⁷ of aminosilane endcapper **E** represents an alkyl or aryl group with 1 to 10 carbon atoms, preferably an ethyl, propyl, butyl, phenyl, or benzyl group.

The secondary aminosilane endcapper **E** is manufactured by the reaction of an aminosilane **AS** according to formula (II) with a Michael acceptor **M** according to formula (III) or (IIIa) 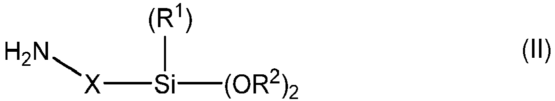 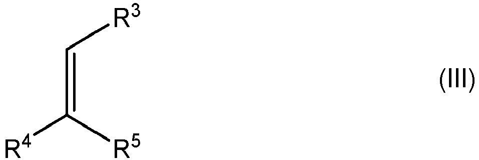 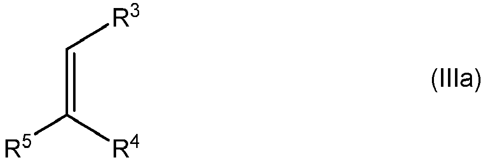 wherein
radicals R¹, R², and X have the same meaning as described further above;
radical R³ and radical R⁵ both represent an alkyl carboxylate group, preferably a methyl or ethyl carboxylate group;
radical R⁴ represents a hydrogen radical or a radical selected from the group -R⁶, -COOR⁶, -CN, or -NO₂;
radical R⁶ represents a linear or branched monovalent hydrocarbon radical having 1 to 20 carbon atoms.

In this preferred embodiment, the synthesis of polymer **P** is a two-step process. The first step is the synthesis of the secondary aminosilane endcapper **E** which afterwards in a second step is used to introduce the silane-function to the polymer **P** by endcapping the isocyanate-functional polyurethane polymer **PUR** via the reaction of the secondary amine group of the endcapper **E** with an isocyanate group of the isocyanate-functional polyurethane polymer **PUR.** More specifically, these two steps include:
i) the reaction of an aminosilane **AS** according to formula (II) 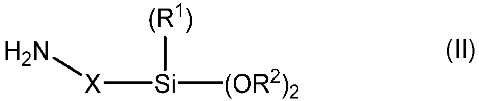 with a Michael acceptor M according to formula (III) or (IIIa); 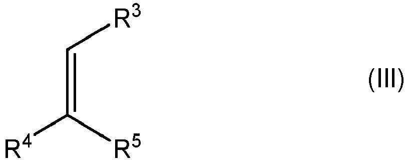 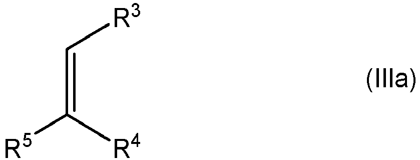
ii) the reaction of m equivalents of the reaction product of i) with one equivalent of an isocyanate-functional polyurethane polymer **PUR** having m isocyanate groups.

The corresponding radicals R¹, R², R³, R⁴, R⁵, R⁶, X and m were described further above.

The reaction of the aminosilane **AS** according to formula (II) in step i) of the method is preferably performed at a temperature of between 0 °C and 140 C, in particular between 20 °C and 100 °C. In preferred embodiments, the molar ratio of aminosilane **AS** to Michael acceptor **M** is approximately 1:1. In other preferred embodiments, the molar ratio of **AS** to **M** is approximately 1:2, but in these cases there are two (primary or secondary) amino groups per molecule of aminosilane **AS.**

Suitable aminosilanes **AS** include all compounds described by Markush structure (II). In preferred embodiments, radicals R¹ and R² in formula (II) each independently represent a methyl, ethyl, or isopropyl group. In the same or different preferred embodiments, X of formula (II) represents a methylene, n-propylene, 3-aza-n-hexylene, or 3-aza-n-pentylene group, preferably a n-propylene group or a 3-aza-n-hexylene group.

Especially preferred aminosilanes **AS** are 3-Aminopropyl methyl dimethoxysilane and N-Aminoethyl-3-aminopropyl methyl dimethoxysilane.

Suitable Michael acceptors **M** include all of the options described by Markush structure (III) or (IIIa), while preferred Michael acceptors **M** are maleic acid esters, fumaric acid esters, and acrylate esters. In all embodiments radical R³ and radical R⁵ of formula (III) or (IIIa) both represent a methyl or ethyl carboxylate group, preferably an ethyl carboxylate group. Especially preferred are maleic acid diethyl ester, maleic acid dimethyl ester, acrylic acid methyl ester and acrylic acid dodecyl ester. Most preferred Michael acceptor **M** is maleic acid diethyl ester.

During reaction step i) as described above the amino group or the amino groups of the aminosilane **AS** described by formula (II) undergo a Michael-type addition to the olefin group of the Michael acceptor **M** described by formula (III) or (IIIa). Such addition reactions are known to the ordinarily skilled artisan and for instance described in US 5,364,955. Depending on the number of amino groups of aminosilane **AS** and the molar ratio of aminosilane **AS** to Michael acceptor **M** employed during reaction it is possible in certain cases that more than one Michael addition occur per molecule of aminosilane **AS**.

In certain embodiments it is possible that subsequent reactions occur after the Michael addition, such as an intramolecular cyclisation. For example, using an aminosilane **AS** with radical X = -CH₂CH₂NHCH₂CH₂CH₂- and a Michael acceptor **M** with radicals R³ = R⁵ = -COOR⁶ and R⁴ = -H, and a molar ratio of aminosilane **AS** to Michael acceptor **M** of 1:1, an intramolecular condensation with cyclisation may occur, forming a piperazinone derivate. Such reactions may be advantageous in certain embodiments, for example in terms of endcapper stability, and they are known to the ordinarily skilled artisan and for example described in US 6,599,354 B1.

The reaction of aminosilane **AS** according to formula (II) with Michael acceptor **M** according to formula (III) or (IIIa) can be done solventless or using a solvent, for example dioxane. It is however preferred to do it solventless if possible.

Of course it is possible to use a mixture of aminosilanes **AS** and/or a mixture of Michael acceptors **M** in the reaction instead of pure substances.

In preferred embodiments of step i) of the method of manufacturing a polymer **P** described above, aminosilane **AS** is 3-Aminopropyl methyl dimethoxysilane or N-Aminoethyl-3-aminopropyl methyl dimethoxysilane and Michael acceptor **M** is maleic acid diethyl ester or acrylic acid methyl ester.

The second reaction step of the synthesis of polymer **P** of said preferred embodiment, described as step ii) further above, i.e. the reaction of m equivalents of the reaction product of i) with one equivalent of an isocyanate-functional polyurethane polymer **PUR** having m isocyanate groups, or in other words the reaction of the silane-functional endcapper **E** with the isocyanate-functional polyurethane polymer **PUR,** is performed using conditions that are known to the ordinarily skilled artisan in the field of polyurethane chemistry. Preferably, in this step the molar ratio of secondary amine groups of all employed endcappers **E** to isocyanate groups of all employed polyurethane polymers **PUR** is approximately 1:1, or with a slight molar excess of secondary amine groups to isocyanate groups, such that the resulting polymer **P** after this reaction is essentially depleted of free isocyanate groups.

For instance, the reaction of the product of reaction step i) as described above with isocyanate-functional polymer **PUR** preferably proceeds in a temperature range of between 0 °C and 150 °C, in particular between 25 °C and 110 °C. The reaction time for this reaction depends largely on the reactants used and the reaction temperature employed; hence the reaction is typically monitored by infrared (IR) spectroscopy to determine the exact end point, following well-known procedures. Preferably the reaction is stopped when no more isocyanate groups can be detected by IR spectroscopy. For example, when working solventless and at a reaction temperature of 90 °C, the reaction time is typically around between 1 and 10 hours, preferably between 2 and 6 hours until no more isocyanate groups can be detected by IR spectroscopy, i.e. the intensity of the IR absorption of isocyanate has decreased by at least 99%.

Both reaction steps i) and ii) are preferably done without catalyst that catalyzes the condensation of silanes. Suitable catalysts are the ones normally used in the field of polyurethane chemistry and those well known to the ordinarily skilled artisan. For example, especially suitable catalysts are Bismuth catalysts such as Bi(III) neodecanoate, available for example under the trade name Coscat® 83 by Vertellus Specialties, USA. It is however preferred not to use catalysts, especially not those that are also highly active silane-curing catalysts, for instance tin complexes, as such compounds may decrease the shelf life of component A if traces of them remain in the polymer **P** after synthesis. Not using such catalysts thus has the advantage that the reaction product can be used without special workup or purification.

Concerning the amount of polymer **P** in component A of the inventive two-component composition, it is preferred to use between 10 wt.-% and 80 wt.-%, preferably between 15 wt.-% and 75 wt.-%, more preferably between 20 wt.-% and 50 wt.-% of polymer **P,** based on the total weight of component A of the inventive two-component composition.

The inventive two-component composition preferably contains at least one filler. Said filler can be included in component A, component B, or both components. The filler influences both the rheological properties of the composition before curing, and the mechanical properties and the surface smoothness of the composition after curing. Suitable fillers include inorganic and organic fillers, for example natural, ground or precipitated calcium carbonates which optionally are coated by fatty acids, preferably stearates, barium sulphate, calcined kaolin, aluminum oxide, aluminum hydroxide, silica, particularly highly dispersed pyrogenic silica, carbon black, PVC powder or hollow microspheres.

Preferably, the fillers are undried. This offers the advantage of faster curing as the contained water can react with the reactive functional groups of the polymer. "Undried" means that the fillers are used as received by the supplier without drying them before formulation of the composition. Fillers such as calcium carbonate are used in significant amounts in such formulations, for example between 20 wt.-% and 60 wt.-%, based on the total composition, and commercially available fillers such as calcium carbonate contain up to 0.5 wt.% of water or more, stemming from adsorption from humid air or elsewhere. One-component compositions containing reactive components, catalyst and water are normally not stable and have poor shelf life. The inventive two-component composition however can be formulated with undried fillers, which allows for an economically more favorable formulation as the drying step of the filler can be omitted, and the water contained in the filler accelerates curing when the two components are mixed together. Therefore, preferred embodiments of the inventive two-component compositions use undried filler.

Thus, the filler used in preferred embodiments of the inventive two-component composition preferably contains between 0.01 wt.-% and 1.5 wt.-% of water, preferably between 0.05 wt.-% and 1 wt.-% of water, based on the weight of the filler. Regarding the total component A, it is preferred to contain between 0.05 wt.-% and 0.75 wt.-%, preferably between 0.1 wt.-% and 0.5 wt.% of water stemming from the filler, based on the total weight of component A.

Preferred fillers include calcium carbonate, calcinated kaolin, carbon black, hollow or gas-filled microspheres (light-weight fillers), highly dispersed silica and flame-retardant fillers, such as hydroxides or hydrates, in particular hydroxides or hydrates of aluminum. Most preferred fillers are calcium carbonate, especially undried calcium carbonate, and light weight fillers comprising hollow microspheres, such as expandable thermoplastic microspheres with an average diameter of between 1 and 50 µm, obtainable by Matsumoto Yushi Corp., Japan.

It is possible and can be advantageous to use a mixture of different fillers, such as a mixture of different calcium carbonates and/or a mixture of calcium carbonate with hollow microspheres.

A suitable amount of filler in component A is for example between 15 wt.-% and 65 wt.-%, preferably between 20 wt.-% and 50 wt.-%, more preferably between 25 wt.-% and 45 wt.-%, based on the total weight of component A.

A suitable amount of filler in component B is for example between 20 wt.-% and 75 wt.-%, preferably between 30 wt.-% and 70 wt.-%, more preferably between 40 wt.-% and 65 wt.-%, based on the total weight of component B.

Thus, in a preferred embodiment of the two-component composition according to the present invention, component A and/or component B comprise undried calcium carbonate, preferably with a water content of between 0.01 wt.-% and 1.5 wt.-% of water, preferably between 0.05 wt.-% and 1 wt.-% of water, based on the weight of the calcium carbonate.

When using hollow microspheres, for example to reduce the overall density of component A and/or B in the two-component composition, it is preferred to use between 0.5 wt.-% and 5 wt.-%, more preferably between 1 wt.-% and 3.5 wt.-%, based on the total weight of respective component A and/or B.

Furthermore, component B of the inventive two-component composition comprises a catalyst system for catalyzing hydrolysis and/or condensation of silanes. Such a catalyst system may comprise a single substance, or several substances with preferably synergistic properties, able to catalyze the hydrolysis and/or condensation of organosilanes and especially the polymers **P** comprised in component A.

Suitable catalyst systems include for example metal complexes, such as tin or titanium compounds, and/or amine compounds such as for example 1,4-Diazabicyclo[2.2.2]octane, 2,2'-Dimorpholinodiethylether, or linear or branched monoalkylamines.

Preferred catalyst systems comprise at least one tin compound and preferably additionally at least one amine compound.

Other preferred catalyst systems comprise at least one titanium compound, preferably in combination with at least one amine compound.

Preferred tin compounds include tin complexes with alkoxy- and/or carboxylate ligands, such as dibutyltin dilaurate, dibutyltin diacetylacetonate, or the corresponding dioctyltin complexes, tin(II) octoate, or dioctyl tin oxide. Most preferred is tin(II) 2-ethylhexanoate (stannous octoate).

Preferred amine compounds, especially in combination with a tin compound, are linear or branched monoalkylamines, preferably with 1 to 20 carbon atoms in their alkyl substituent, more preferably with 5 to 18 carbon atoms.

Most preferred catalyst systems comprise a combination of a tin compound and an amine, for example tin octoate and dodecyl amine.

In a preferred embodiment, component B comprises at least one tin compound with an amount between 2 wt.-% and 20 wt.-%, preferably between 3 wt.-% and 15 wt-%, based on the total weight of component B, and at least one amine compound with an amount of between 0 wt.-% and 10 wt.-%, preferably between 2 wt.-% and 8 wt.-%, based on the total weight of component B.

The inventive two-component composition optionally comprises other additives which depending on their chemical properties may be comprised in component A, component B, or both. Examples of such additives include:
- plasticizers, e.g. carbonic acid esters or anhydrides, such as phthalates, for example dioctyl phthalate, diisononyl phthalate or diisodecyl phthalate, adipates, for example dioctyl adipate, azelates and sebacates, polyether or polyester polyols, such as polyoxyalkylene polyols, organic phosphoric or sulphonic acid esters, polybutenes;
- solvents;
- fibers, for example polyethylene fibers;
- colorants or pigments;
- rheology modifiers, such as urea compounds as described as "thixotropy endowning agent" in WO 02/49229 A2 on pages 9 to 11, polyamide waxes, bentonites, or pyrogenic silica;
- adhesion promoters, such as epoxy silanes, (meth)acrylate silanes, anhydrido silanes, or adducts of these silanes with amino silanes, as well as amino silanes or urea silanes;
- crosslinkers or reactive diluents, such as silane-functional oligo- or polymers;
- stabilizers, for example against heat, light- or UV radiation;
- flame retardants;
- surface-active substances such as surfactants, flowing aides, deaerating agents, or defoamers;
- biocides, such as algicides or fungicides;

And other additives commonly used in elastic sealant compositions and known to the normally skilled artisan in the field of elastic sealant formulation.

It is advantageous to adjust all optional additives and constituents mentioned above in a way that the application properties or the shelf life of the composition are not adversely affected. For the inventive two-component composition this means that compounds which react with each other in an undesired way before application should not be in the same component A or B, but rather separated, if possible.

Since the two-component composition according to the present invention employs silane-functional polymers **P** and catalyst system in separated components, it is not necessary to dry all other constituents, such as fillers, in order to ensure an acceptable shelf-life. It is even advantageous to use undried fillers in preferred embodiments, as the water contained therein accelerates the curing after mixing of components A and B and omitting the drying step for the filler facilitates the formulation of the two-component composition.

An especially preferred embodiment of the two-component composition according to the present invention is a composition wherein component A comprises between 20 wt.-% and 40 wt.-%, preferably between 25 wt.-% and 35 wt.-%, based on the total weight of component A, of at least one polymer **P** obtained by the method as described above, and between 20 wt.-% and 40 wt.%, based on the total weight of component A, of undried calcium carbonate, and between 0.5 wt.-% and 5 wt.-%, based on the total weight of component A, of hollow microspheres, and wherein component B comprises between 2 wt.-% and 20 wt.-%, preferably between 3 wt.-% and 15 wt-%, based on the total weight of component B, of a tin compound and between 0 wt.-% and 10 wt.-%, preferably between 2 wt.-% and 8 wt.-%, based on the total weight of component B, of an amine compound and between 45 wt.-% and 65 wt.-%, preferably between 50 wt.-% and 60 wt.-%, based on the total weight of component B, of undried calcium carbonate.

Component A of the two-component composition according to the present invention is preferably stored in a pail or the like, while component B can be stored in any containment such as a pail, bag, unipack, cartridge, or the like. Due to the two-component system, it is not crucial for the present invention to use a container that is highly impermeable to air or humidity.

Component A and component B of the inventive two-component composition are produced and stored separately and preferably mixed shortly prior to application. It is advantageous to mix the two components directly in the container (e.g. a pail) of component A, as this component is generally larger in volume. With this approach, both components can be added together and mixed thoroughly, for example during 15 min using a hand-held blender or mixer. In some embodiments, other additives, such as colorants, can be added as well in this step to generate the desired end properties of the total composition, for example concerning esthetic appearance. Thus mixed components A and B of the present invention have typically a pot life of 1 to 5, preferably 2 to 4 hours. It is preferred to formulate and pack the components A and B in amounts that are directly compatible with each other in terms of amount per package unit, in order to facilitate application and avoid mixing errors. For example, in preferred embodiments the mixing ratio in terms of weight of component A to component B is between 8:1 and 12:1 (w/w).

The separately stored components A and B enable a shelf life of the inventive two-component composition of typically several months up to a year or longer, during which time the thus stored inventive two-component composition does not change significantly in its application properties, such as viscosity, or its final, mechanical or other, properties after curing.

Shelf life can be estimated for example by measuring the extrusion force or viscosity over time. A significant increase in extrusion force over short time, for example 1 month, typically means a poor shelf life.

Another aspect of the invention is the high durability of preferred embodiments of the inventive two-component composition after curing. More specifically, preferred embodiments of the cured composition pass the durability test according to Japanese industrial standard JIS A 5758:2010 and reach classification 9030.

The inventive two-component composition is suitable to be used as sealant or adhesive, preferably as joint sealant.

A further aspect of the present invention is the cured or curing two-component composition according to the description above, obtained by mixing of component A and component B using a static or dynamic mixing system and applying the mixture to a substrate, preferably a joint.

### Examples

The invention is further explained in the following experimental part which, however, shall not be construed as limiting to the scope of the invention. The proportions and percentages indicated are by weight, unless otherwise stated. Accordingly, "wt.-%" means percentage by weight, based on the weight of the total composition given in the respective case. "RT" means room temperature or ambient temperature and describes a temperature of 23 °C. The abbreviation "r.h." or "% r.h." means relative humidity (in %) of the ambient air in a given example. The abbreviation "(w/w)" means weight per weight, proportion by weight, or for example weight ratio of two components that are mixed together. "Weight" and "mass" are used interchangeably in this document.

### Test methods

**Tensile strength, elongation at break,** and **E-modulus (0-100%)** were measured according to JIS A 5758:1992 using H-shape samples. Sample preparation was as follows: The aluminum platelets (50x50x3 mm) were pretreated with a specific primer (Sika Primer 80). The sealant bead was 12x12x50mm in size. The samples were cured for 7d at RT and 7d at 50°C. For heat aging, the cured samples were kept for 2w at 90°C. After completion of the tests (elongation until failure or break), the failure mode was classified for each sample according to the following codes: "Cf"= Cohesive failure, "TL" = Thin layer failure, "Af" = Adhesive failure.

**Shore A and C hardness** was measured according to JIS K 6253.

**Viscosity** measurements on the polymers were performed after storage in airtight aluminum cartridges during 1 day at RT. The measurements were done on a thermostatic cone-disc rheometer RC30 (Rheotec GmbH, Germany) at 20 °C (cone diameter 20 mm, cone angle 1°, distance between tip oft he cone and disc 0.05 mm, shear rate 50 s⁻¹).

The shelf-life of components A was estimated by measuring the **extrusion force** according to the following procedure: The compositions were stored in airtight aluminum cartridges and conditioned during 1 day at RT before being extruded through a 3 mm nozzle using an extrusion machine (Zwick/Roell Z005). The force necessary to extrude the composition through the nozzle with a rate of 60 mm/min equals the initial extrusion force. A second measurement was done on an identical cartridge which however had been conditioned during 7 days at 60 °C in order to simulate aging. In both measurements the values given were obtained from the average force value after extrusion of 22 mm, 24 mm, 26 mm und 28 mm. After 30 mm extrusion the measurements were stopped.

**Penetration depth** was measured according to ASTM D1321 and employing the following procedure: The freshly mixed sealant was placed into a 100ml plastic beaker and the surface was flattened by a spatula. The sample was kept at RT and 50% r.h. for the indicated time (1, 3, 5h). For the measurement, a thin needle (weight=10.27g) was placed on the surface and released to penetrate into the sealant sample for 5 sec. The penetrated depth is given in 0.1 mm. High penetration value means low viscosity of the sealant.

**Durability** was tested according to JIS A 5758:2010 for the class 9030 (90°C, 30% compression/elongation). Sample preparation was as follows: The aluminum platelets (50x50x3 mm) were pretreated with specific primer (Sika Primer 80). The sealant bead was 12x12x50mm in size. Sample curing and pre-aging was done as follows: The samples were cured for 7d at 23°C/50% r.h. and 7d at 50°C. Then two cycles of 24h in water (50°C), 24h at 90°C (not in water) with -30% compression, 7d at -10C with +30% compression were performed. 2000 compression/elongation cycles were repeated with compression/elongation at +/-30% (cycle time: 12s)

The individual samples passed the testing, if they did not exhibit significant differences (such as cracks or other mechanical damages) compared to samples that had not undergone the durability procedure described above.

### Raw materials used

For the example compositions, both inventive and reference two-component compositions, the raw materials as listed in Table 1 were used without further purification as received, unless otherwise stated.

**Table 1: Raw materials used in the example two-component compositions.**

| **Chemical compound** | **Trade name (producer)** |
|---|---|
| 3-Aminopropyl methyl dimethoxysilane | KH-554 (Fedian Chemical, China). |
| 3-Aminopropyl trimethoxysilane | KBM-903 (Shin-Etsu Chemical, Japan) |
| N-Aminoethyl-3-aminopropyl methyl dimethoxysilane | KBM-602 (Shin-Etsu Chemical, Japan) |
| 3-Aminopropyl triethoxysilane | KBE-903 (Shin-Etsu Chemical, Japan) |
| Mercaptopropyl methyl dimethoxysilane | KBM-802 (Shin-Etsu Chemical, Japan) |
| Mercaptopropyl trimethoxysilane | KBM-803 (Shin-Etsu Chemical, Japan) |
| Maleic acid ethyl ester | (Sigma Aldrich, Switzerland) |
| Lauryl acrylate | (Sigma Aldrich, Switzerland) |
| Polyether polyol | Preminol S 4111 (Asahi Glass Corp., Japan) |
| Isophoron diisocyanate (IPDI) | Vestanat IPDI (Evonik, Japan) |
| Diisodecyl phthalate (DIDP) | Palatinol Z (Exxon Mobile, USA) |
| Vinyl trimethoxysilane | KBM-1003 (Shin-Etsu Chemical, Japan) |
| Silane-functional polymer | MS Polymer S-810 (Kaneka Corp., Japan) |
| Silane-functional polymer | Vorasil TM 602 (Dow Chemical, USA) |
| Silane-functional polymer | Desmoseal S XP-2638 (Bayer AG, Germany) |
| Lauryl amine | Farmin 20D (Kao Chemicals, Japan) |
| Tin octoate | Neostann U-28 (Nitto Kasei, Japan) |
| Bismuth(III) neodecanoate | Coscat 83 (Vertellus Specialities, USA) |
| Ground calcium carbonate (5 µm) undried with 0.1 wt.-% water | Special Rise Super SS (Maruo Calcium, Japan) |
| Precipitated calcium carbonate (0.08 µm) undried with 0.4 wt.-% water | Hakuenka CCR-B (Shiraishi Calcium, Japan) |
| UV-Stabilizer (benzotriazole-based) | SB-UVA626 (Shuang-Bang Industrial, Taiwan) |
| Antioxidant (hindered phenol) | Adeka Stab AO-50 (Adeka Corporation, Japan) |
| Light weight filler (thermoplastic microspheres, diameter between 5 and 50 µm) | Microballoon MFL-60A (Matsumoto Yushi Corporation, Japan) |
| Epoxy resin | JER828 (Mitsubishi Chemical, Japan) |

### Synthesis of endcappers

The individual endcappers **E** for the synthesis of the exemplary silane-functional polymers **P** were prepared by reacting various types of aminosilanes **AS** with Michael acceptors **M** as detailed in Table 2. The amounts given are molar ratios in the reaction of the aminosilane with the respective Michael acceptor. The column "Reaction conditions" shows the reaction time and temperature conditions of the solventless reactions. Additionally, two mercaptosilanes and an aminosilane were used as endcappers without any reaction partners for non-inventive comparative reference examples (S1, S8, S9), as well as two non-inventive trifunctional silanes (for S2 and S4).

**Table 2: Synthesis details of the endcappers used for subsequent silane-functionalisation of the isocyanate-functional polyurethane polymers.**

| **Silane** | | | **Michael acceptor** | | **Reaction conditions** |
|---|---|---|---|---|---|
| **Type** | **Chemical name** | **Amount (%)** | **Chemical name** | **Amount (%)** | |
| **S1** | 3-Aminopropyl methyl dimethoxysilane | 100 | - | - | |
| **S2** | 3-Aminopropyl trimethoxysilane | 51.01 | Maleic acid ethyl ester | 49.99 | 3h RT |
| **S3** | 3-Aminopropyl methyl dimethoxysilane | 48.67 | Maleic acid ethyl ester | 51.33 | 3h RT |
| **S4** | 3-Aminopropyl triethoxysilane | 56.25 | Maleic acid ethyl ester | 43.75 | 3h RT |
| **S5** | N-Aminoethyl-3-Aminopropyl methyl dimethoxysilane | 54.51 | Maleic acid ethyl ester | 45.49 | 12h 60°C |
| **S6** | N-Aminoethyl-3-Aminopropyl methyl dimethoxysilane | 37.47 | Maleic acid ethyl ester | 62.53 | 3h RT |
| **S7** | N-Aminoethyl-3-Aminopropyl methyl dimethoxysilane | 40.45 | Lauryl acrylate | 59.55 | 7d 50°C, 7d RT |
| **S8** | Mercaptopropyl methyldimethoxy silane | 100% | - | - | |
| **S9** | Mercaptopropyl trimethoxy silane | 100% | - | - | |

### Synthesis of polymers P

500g of Preminol® S-4111 (low monol polyoxypropylendiol, OH-number 11.0 mg KOH/g, water content about 0.02 % (w/w)), 19.6 g Isophorondiisocyanate (IPDI), 242.2 g of Diisodecylphthalate (DIDP) and 0.12 g Bi-catalyst (Coscat 83) were mixed in a nitrogen atmosphere and heated up to 90°C. After 2h mixing, NCO-content was determined by titration. After achieving the target NCO of 0.35%, the required amount of the respective endcapper (as listed in Table 2) was added. The mixture was then kept for another 4h at 90°C, until no NCO could be detected by IR anymore. After cooling down to 70°C, 3g vinyl trimethoxysilane (KBM-1003), was added to the mixture. The details of each polymer synthesis are given in Table 3.

**Table 3: Synthesis details of the silane-functional polyurethane polymers.**

| **Polymer** | **Preminol S-4111** | **Isocyanate** | | **Endcapper** | | **DIDP** | **KBM-1003** | **Viscosity (Pa·s)** |
|---|---|---|---|---|---|---|---|---|
| | **Amount (g)** | **Type** | **Amount (g)** | **Type** | **Amount (g)** | **Amount (g)** | **Amount (g)** | |
| **P1** | MS Polymer S-810 (Kaneka; contains 10% Plasticizer) | | | | | | | 22 |
| **P2** | Vorasil TM 602 (Dow Chemicals) | | | | | | | 35 |
| **P3** | Desmoseal S XP-2638 (Bayer) | | | | | | | 55 |
| **P4** | 500.00 | IPDI | 19.59 | S1 | 8.69 | 226.41 | 3.77 | 51 |
| **P5** | 500.00 | IPDI | 18.43 | S2 | 19.15 | 230.39 | 3.84 | 70 |
| **P6** | 500.00 | IPDI | 19.59 | S3 | 20.00 | 231.25 | 3.85 | 46 |
| **P7** | 500.00 | IPDI | 19.59 | S4 | 23.46 | 232.74 | 3.88 | 55 |
| **P8** | 500.00 | IPDI | 19.59 | S5 | 23.89 | 232.92 | 3.88 | 78 |
| **P9** | 500.00 | IPDI | 19.59 | S6 | 30.94 | 235.94 | 3.93 | 45 |
| **P10** | 500.00 | IPDI | 19.59 | S7 | 28.82 | 230.43 | 3.84 | 38 |
| **P11** | 500.00 | IPDI | 19.59 | S8 | 11.40 | 227.57 | 3.79 | 42 |
| **P12** | 500.00 | IPDI | 19.59 | S9 | 9.32 | 226.68 | 3.78 | 33 |
| **P13** | 500.00 | TDI | 18.40 | S3 | 18.66 | 230.17 | 3.84 | 18 |
| **P14** | 500.00 | MDI | 23.82 | S3 | 18.80 | 232.55 | 3.88 | 41 |

### Manufacturing of two-component compositions

Several inventive and non-inventive reference two-component compositions were prepared according to the following procedure and subsequently tested.

### Component A

All ingredients except the microballoons were mixed in a metal can on a lab mixer under vacuum at high speed for 10 min. After scrape down, the microballoons were added, and mixed for another 10 min at low speed under vacuum. The mixture was filled into cartridges. The composition details of each component A are shown in Tables 5 to 10.

### Component B

All ingredients were mixed in a metal can on a lab mixer under vacuum at medium speed for 10 min and filled into cartridges. The composition details of each component B are shown in Table 4.

### Mixing of component A and component B

In all trials the mixing ratio was A:B = 10:1 (w/w). The mixture was mixed for 10 minutes at low speed on a lab mixer under vacuum and directly used for sample preparation.

### Compositions of components B

Example components B were prepared according to the procedure given above with the composition details (in wt.-% based on the total weight of component B) as listed in Table 4.

**Table 4: Composition details of components B used for exemplary two-component compositions.**

| **Component B** | **B1** | **B2** | **B3** | **B4** |
|---|---|---|---|---|
| ***Raw material*** | **[%]** | **[%]** | **[%]** | **[%]** |
| DIDP | 30 | 23 | 37 | 22 |
| Neostann U-28 | 10 | 15 | 3 | 10 |
| Farmin 20D | 4 | 5 | - | 8 |
| Special Rise Super SS | 56 | 57 | 60 | 60 |
| ***Total*** | *100* | *100* | *100* | *100* |

### Screening of polymer endcappers with different silane functionalities

The endcappers for silane-functionalization of the isocyanate-functional polyurethane polymers **PUR** were tested in a series of experiments in inventive and non-inventive (reference) two-component compositions. The corresponding components A of each experiment and the test results are shown in Table 5.

**Table 5: Inventive and non-inventive (reference) two-component compositions with different silane-functionalisation endcappers.**

| **Example** | | **EC1** | **RC1** | **RC2** | **RC3** | **RC4** |
|---|---|---|---|---|---|---|
| **Component A** | | ***Inventive*** | ***Reference*** | | | |
| ***Raw material*** | | [%] | [%] | [%] | [%] | [%] |
| Polymer type | | **P6** | **P5** | **P4** | **P11** | **P12** |
| Polymer amount | | 32.50 | 32.50 | 32.50 | 32.50 | 32.50 |
| Hakuenka CCR-B | | 30.00 | 30.00 | 30.00 | 30.00 | 30.00 |
| SB-UVA626 | | 0.10 | 0.10 | 0.10 | 0.10 | 0.10 |
| Adeka Stab AO-50 | | 0.10 | 0.10 | 0.10 | 0.10 | 0.10 |
| Special Rise Super SS | | 15.00 | 15.00 | 15.00 | 15.00 | 15.00 |
| DIDP | | 19.30 | 19.30 | 19.30 | 19.30 | 19.30 |
| Microballoon MFL-60CA | | 3.00 | 3.00 | 3.00 | 3.00 | 3.00 |
| *Total* | | *100.00* | *100.00* | *100.00* | *100.00* | *100.00* |
| | | | | | | |

| **Component B** | | **B1** | **B3** | **B1** | **B2** | **B2** |
|---|---|---|---|---|---|---|
| **Test results** | | | | | | |
| Extrusion Force (N) | 1d RT | 463 | 566 | 508 | 595 | 620 |
| | 7d 60°C | 617 | 849 | 836 | 1227 | *cured* |
| Penetration (0.1 mm) | 1h | 297 | 257 | 98 | 181 | |
| | 3h | 124 | 219 | 0 | 77 | |
| | 5h | 47 | 62 | 0 | 52 | |
| Durability test (JIS A 5758, 2000 cycles) | | *passed* | *passed* | *failed* | *failed* | - |
| Hardness, Shore C 23°C, 50% r.h., | 1d | 27 | 30 | 30 | 0 | |
| | 7d | 28 | 43 | 32 | 11 | |
| Hardness Shore A 23°C, 50% r.h., | 1d | <5 | 9 | 8 | 0 | |
| | 7d | 5 | 14 | 8 | 0 | |
| E-modulus 0-100% (MPa) | *7d RT + 7d 50°C* | 0.16 | 0.30 | 0.21 | 0.04 | |
| Tensile strength (MPa) | | 0.49 | 0.68 | 0.36 | 0.10 | |
| Elongation (%) | | 897 | 572 | 541 | 547 | |
| Type of failure | | Cf50/ TL50 | Cf100 | Cf50/ TL50 | Cf100 | |
| E-modulus 0-100% (MPa) | *+ 14d 90°C* | 0.17 | 0.30 | 0.22 | 0.05 | |
| Tensile strength (MPa) | | 0.45 | 0.60 | 0.30 | 0.10 | |
| Elongation (%) | | 871 | 564 | 389 | 384 | |
| Type of failure | | Cf50/TL50 | CF100 | CF100 | CF100 | |

Comparison of endcappers with two or three hydrolysable silane groups, as detailed in Table 5, shows that a highly preferred embodiment with dimethoxysilane end groups on the polymer (EC1) offers the best results for a low modulus joint sealant in this example series. The trifunctional trimethoxy endcapper (RC1) exhibits inferior shelf life stability (comparison of extrusion force tests) of the A-component and higher E-modulus than the inventive example. Polymers endcapped without the inventive secondary aminosilane endcappers (RC2) have too low elongation and tensile strength and fail the durability test. Mercapto silane endcappers (RC3 and RC4) fail the durability test as well or are not stable in component A.

### Comparison of polymer P with non-inventive silane-functional polymers

In comparison with inventive two-component composition comprising polymer **P,** several non-inventive two-component compositions comprising other, commercially available silane-functional polymers were tested. The corresponding components A of each experiment and the test results are shown in Table 6.

**Table 6: Inventive and non-inventive (reference) two-component compositions with different silane-functionalised polymers.**

| **Example** | | **EC1** | **RC5** | **RC6** | **RC7** |
|---|---|---|---|---|---|
| **Component A** | | ***Inventive*** | ***References*** | | |
| ***Raw material*** | | [%] | [%] | [%] | [%] |
| Polymer type | | P6 | P1 | P2 | P3 |
| Polymer amount | | 32.50 | 25.00 | 22.75 | 22.75 |
| Hakuenka CCR-B | | 30.00 | 30.00 | 30.00 | 30.00 |
| SB-UVA626 | | 0.10 | 0.10 | 0.10 | 0.10 |
| Adeka Stab AO-50 | | 0.10 | 0.10 | 0.10 | 0.10 |
| Special Rise Super SS | | 15.00 | 15.00 | 15.00 | 15.00 |
| DIDP | | 19.30 | 26.80 | 29.05 | 29.05 |
| Microballoon MFL-60CA | | 3.00 | 3.00 | 3.00 | 3.00 |
| ***Total*** | | *100.00* | 100.00 | 100.00 | 100.00 |
| | | | | | |

| **Component B** | | **B1** | **B1** | **B3** | **B3** |
|---|---|---|---|---|---|
| **Test results** | | | | | |
| Extrusion Force (N) | 1d RT | 463 | 327 | 285 | 527 |
| | 7d 60°C | 617 | 426 | 434 | *cured* |
| Penetration (0.1 mm) | 1h | 297 | 353 | 426 | |
| | 3h | 124 | 70 | 393 | |
| | 5h | 47 | 40 | 316 | |
| Durability test (JIS A 5758, 2000 cycles) | | *passed* | *failed* | *failed* | - |
| Hardness, Shore C 23°C, 50% | 1d | 27 | 28 | 34 | |
| | 7d | 28 | 28 | 37 | |
| r.h., | | | | | |
| Hardness Shore A 23°C, 50% r.h., | 1d | <5 | 5 | 7 | |
| | 7d | 5 | 5 | 8 | |
| E-modulus 0-100% (MPa) | *7d RT + 7d 50°C* | 0.16 | 0.18 | 0.25 | |
| Tensile strength (MPa) | | 0.49 | 0.38 | 0.32 | |
| Elongation (%) | | 897 | 751 | 420 | |
| Type of failure | | Cf50/TL50 | CF100 | Cf50/TL50 | |
| E-modulus 0-100% (MPa) | *+ 14d 90°C* | 0.17 | 0.17 | 0.20 | |
| Tensile strength (MPa) | | 0.45 | 0.36 | 0.31 | |
| Elongation (%) | | 871 | 794 | 487 | |
| Type of failure | | Cf50/TL50 | Cf50/TL50 | Cf20/TL80 | |

Comparison of the inventive two-component composition with several other, non-inventive reference compositions (based on other silane-functional polymers) shows that only the inventive composition passes the durability test. Reference example RC5 (based on MS polymer) and RC6 (based on Vorasil TM 602) exhibit inferior durability and fail the JIS testing. Whereas RC5 is soft, RC6 is most probably too hard to pass JIS testing. Reference example RC7 (Desmoseal S XP-2638) showed bad shelf life stability and was cured after 7d at 60 °C.

### Screening of polymer endcappers E with different aminosilanes AS or Michael acceptors M

Some endcappers **E** for silane-functionalisation of the isocyanate-functional polyurethane polymers were tested in a series of experiments in inventive two-component compositions. The corresponding components A of each experiment and the test results are shown in Table 7.

**Table 7: Inventive two-component compositions with different silane-functionalisation endcappers.**

| **Example** | | **EC1** | **EC2** | **EC3** | **EC4** |
|---|---|---|---|---|---|
| **Component A** | | ***Inventive*** | | | |
| ***Raw material*** | | [%] | [%] | [%] | [%] |
| Polymer type | | **P6** | **P8** | **P9** | **P10** |
| Polymer amount | | 32.50 | 32.50 | 32.50 | 32.50 |
| Hakuenka CCR-B | | 30.00 | 30.00 | 30.00 | 30.00 |
| SB-UVA626 | | 0.10 | 0.10 | 0.10 | 0.10 |
| Adeka Stab AO-50 | | 0.10 | 0.10 | 0.10 | 0.10 |
| Special Rise Super SS | | 15.00 | 15.00 | 15.00 | 15.00 |
| DIDP | | 19.30 | 16.30 | 19.30 | 19.30 |
| JER828 | | | 3.00 | | |
| Microballoon MFL-60CA | | 3.00 | 3.00 | 3.00 | 3.00 |
| ***Total*** | | 100.00 | 100.00 | 100.00 | 100.00 |
| | | | | | |

| **Component B** | | **B1** | **B1** | **B1** | **B1** |
|---|---|---|---|---|---|
| **Test results** | | | | | |
| Extrusion Force (N) | 1d RT | 463 | 505 | 517 | 482 |
| | 7d 60°C | 617 | 573 | 585 | 582 |
| Penetration (0.1 mm) | 1h | 297 | 309 | 268 | 313 |
| | 3h | 124 | 224 | 93 | 166 |
| | 5h | 47 | 176 | 85 | 64 |
| Durability test (JIS A 5758, 2000 cycles) | | *passed* | *passed* | *very soft* | *passed* |
| Hardness, Shore C 23°C, 50% r.h., | 1d | 27 | 24 | 29 | 36 |
| | 7d | 28 | 46 | 29 | 37 |
| Hardness Shore A 23°C, 50% r.h., | 1d | <5 | <5 | <4 | 10 |
| | 7d | 5 | 14 | 4 | 10 |
| E-modulus 0-100% (MPa) | *7d RT + 7d 50°C* | 0.16 | 0.39 | 0.15 | 0.21 |
| Tensile strength (MPa) | | 0.49 | 0.56 | 0.34 | 0.50 |
| Elongation (%) | | 897 | 545 | 750 | 923 |
| Type of failure | | Cf50/TL50 | Cf100 | Cf5/TL95 | Cf80/TL20 |
| E-modulus 0-100% (MPa) | *+ 14d 90°C* | 0.17 | 0.37 | 0.17 | 0.04 |
| Tensile strength (MPa) | | 0.45 | 0.78 | 0.31 | 0.14 |
| Elongation (%) | | 871 | 338 | 674 | 686 |
| Type of failure | | Cf50/TL50 | Cf100 | Cf20/TL80 | Cf100 |

Preferred embodiments use endcappers with a molar ratio of aminosilane **AS** to Michael acceptor **M** (a preferred one is maleic acid diethyl ester as used in EC1, EC2, and EC4 and another one is lauryl acrylate as used in EC3) of approximately 1:1 (as in EC1, EC2, and EC3). The advantage is a higher durability of the cured composition and therefore passing of the durability test. The example composition with 2:1 molar ratio of maleic acid diester to aminosilane in the endcapper synthesis (EC4) shows slightly inferior properties, since this type of endcapper does not pass the durability test being very soft.

### Screening of different polyisocyanates

Different polyisocyanates were tested for the synthesis of the isocyanate-functional polymers PUR that subsequently were reacted with a most preferred endcapper. The results are shown in Table 8.

**Table 8: Comparison of the performance of several polyurethane polymers that use different polyisocyanates in inventive two-component compositions.**

| **Example** | | **EC1** | **EC5** | **EC6** |
|---|---|---|---|---|
| **Component A** | | ***Inventive*** | | |
| ***Raw material*** | | [%] | [%] | [%] |
| Polymer type | | **P6** | **P13** | **P14** |
| Polymer amount | | 32.50 | 32.50 | 32.50 |
| Hakuenka CCR-B | | 30.00 | 30.00 | 30.00 |
| SB-UVA626 | | 0.10 | 0.10 | 0.10 |
| Adeka Stab AO-50 | | 0.10 | 0.10 | 0.10 |
| Special Rise Super SS | | 15.00 | 15.00 | 15.00 |
| DIDP | | 19.30 | 19.30 | 19.30 |
| Microballoon MFL-60CA | | 3.00 | 3.00 | 3.00 |
| ***Total*** | | *100.00* | 100.00 | 100.00 |
| | | | | |

| **Component B** | | **B1** | **B1** | **B1** |
|---|---|---|---|---|
| **Test results** | | | | |
| Extrusion Force (N) | 1d RT | 463 | 400 | 905 |
| | 7d 60°C | 617 | 541 | 951 |
| Penetration (0.1 mm) | 1h | 297 | 366 | 207 |
| | 3h | 124 | 128 | 78 |
| | 5h | 47 | 41 | 46 |
| Durability test (JIS A 5758, 2000 cycles) | | *passed* | *failed* | *failed* |
| Hardness, Shore C 23°C, 50% r.h., | 1d | 27 | 25 | 24 |
| | 7d | 28 | 29 | 30 |
| Hardness Shore A 23°C, 50% r.h., | 1d | <5 | <5 | <5 |
| | 7d | 5 | 5 | 5 |
| E-modulus 0-100% (MPa) | *7d RT* + *7d 50°C* | 0.16 | 0.15 | 0.14 |
| Tensile strength (MPa) | | 0.49 | 0.34 | 0.40 |
| Elongation (%) | | 897 | 468 | 502 |
| Type of failure | | Cf50/ TL50 | Cf70/TL30 | Cf100 |
| E-modulus 0-100% (MPa) | *+ 14d 90°C* | 0.17 | 0.14 | 0.18 |
| Tensile strength (MPa) | | 0.45 | 0.29 | 0.38 |
| Elongation (%) | | 871 | 451 | 435 |
| Type of failure | | Cf50/TL50 | Cf100 | Cf80/TL20 |

Direct comparison of different polyisocyanates (MDI, TDI and IPDI) shows an advantage of the aliphatic IPDI (EC1) compared to the aromatic types in terms of durability of the cured composition. Using TDI (EC5) instead of IPDI shows rather similar properties regarding shelf life and modulus as IPDI but the performance in the durability test is slightly worse. The use of MDI (EC6) increases the viscosity of resulting polymer **P** and leads also to a comparably high viscous sealant (component A). The other properties are rather similar, besides the drawback of poor performance in the durability test.

### Variation of the relative composition of component A

The relative amount of polymer **P** and calcium carbonate filler was varied and the effect on the performance of the inventive two-component composition studied. The compositions and the test results are shown in Table 9.

| **Example** | | **EC1** | **EC7** | **EC8** | **EC9** |
|---|---|---|---|---|---|
| **Component A** | | ***Inventive*** | | | |
| ***Raw material*** | | [%] | [%] | [%] | [%] |
| Polymer type | | **P6** | **P6** | **P6** | **P6** |
| Polymer amount | | 32.50 | 22.50 | 32.50 | 32.50 |
| Hakuenka CCR-B | | 30.00 | 30.00 | 35.00 | 40.00 |
| SB-UVA626 | | 0.10 | 0.10 | 0.10 | 0.10 |
| Adeka Stab AO-50 | | 0.10 | 0.10 | 0.10 | 0.10 |
| Special Rise Super SS | | 15.00 | 15.00 | 15.00 | 15.00 |
| DIDP | | 19.30 | 29.30 | 14.30 | 9.30 |
| Microballoon MFL-60CA | | 3.00 | 3.00 | 3.00 | 3.00 |
| ***Total*** | | 100.00 | 100.00 | 100.00 | 100.00 |
| | | | | | |

| **Component B** | | **B1** | **B1** | **B1** | **B1** |
|---|---|---|---|---|---|
| **Test results** | | | | | |
| Extrusion Force (N) | 1d RT | 463 | 313 | 560 | *1034* |
| | 7d 60°C | 617 | 379 | 750 | *1209* |
| Penetration (0.1 mm) | 1h | 297 | >450 | 310 | 152 |
| | 3h | 124 | 188 | 93 | 57 |
| | 5h | 47 | 79 | 30 | 26 |
| Durability test (JIS A 5758, 2000 cycles) | | *passed* | *passed* | *passed* | *passed* |
| Hardness, Shore C 23°C, 50% r.h., | 1d | 27 | 20 | 28 | 30 |
| | 7d | 28 | 20 | 30 | 32 |
| Hardness Shore A 23°C, 50% r.h., | 1d | <5 | <5 | 7 | 9 |
| | 7d | 5 | <5 | 7 | 10 |
| E-modulus 0-100% (MPa) | *7d RT + 7d 50°C* | 0.16 | 0.09 | 0.20 | 0.25 |
| Tensile strength (MPa) | | 0.49 | 0.29 | 0.55 | 0.55 |
| Elongation (%) | | 897 | 864 | 860 | 759 |
| Type of failure | | Cf50/TL50 | Cf100 | Cf70/TL30 | Cf90/TL30 |
| E-modulus 0-100% (MPa) | *+ 14d 90°C* | 0.17 | 0.11 | 0.25 | 0.31 |
| Tensile strength (MPa) | | 0.45 | 0.25 | 0.50 | 0.53 |
| Elongation (%) | | 871 | 752 | 808 | 674 |
| Type of failure | | Cf50/TL50 | Cf100 | Cf70/TL30 | Cf50/TL50 |

**Table 9:** Inventive two-component compositions with varying amount of prepolymer and calcium carbonate.

As shown in Table 9, reducing the polymer or increasing the calcium carbonate filler does affect several properties, but the durability test is always passed.

### Variation of the catalyst system in component B

The amount and type of catalyst was varied and the effect on the performance of the inventive two-component composition studied. The compositions and the test results are shown in Table 10.

**Table 10: Inventive two-component compositions with variations of the catalyst system in component B.**

| **Example** | | **EC1** | **EC10** | **EC11** | **EC12** |
|---|---|---|---|---|---|
| **Component A** | | | | | |
| ***Raw material*** | | [%] | [%] | [%] | [%] |
| Polymer type | | **P6** | **P6** | **P6** | **P6** |
| Polymer amount | | 32.50 | 32.50 | 32.50 | 32.50 |
| Hakuenka CCR-B | | 30.00 | 30.00 | 30.00 | 30.00 |
| SB-UVA626 | | 0.10 | 0.10 | 0.10 | 0.10 |
| Adeka Stab AO-50 | | 0.10 | 0.10 | 0.10 | 0.10 |
| Special Rise Super SS | | 15.00 | 15.00 | 15.00 | 15.00 |
| DIDP | | 19.30 | 19.30 | 19.30 | 19.30 |
| Microballoon MFL-60CA | | 3.00 | 3.00 | 3.00 | 3.00 |
| ***Total*** | | 100.00 | 100.00 | 100.00 | 100.00 |
| | | | | | |

| **Component B** | | **B1** | **B3** | **B2** | **B4** |
|---|---|---|---|---|---|
| **Test results** | | | | | |
| Extrusion Force (N) | 12h RT | 463 | 463 | 463 | 463 |
| | 7d 60°C | 617 | 617 | 617 | 617 |
| Penetration (0.1 mm) | 1h | 297 | 342 | 297 | 354 |
| | 3h | 124 | 245 | 74 | 152 |
| | 5h | 47 | 187 | 31 | 85 |
| Durability test (JIS A 5758, 2000 cycles) | | *passed* | *passed* | *passed* | *passed* |
| Hardness, Shore C 23°C, 50% r.h., | 1d | 27 | 27 | 28 | 29 |
| | 7d | 28 | 30 | 28 | 29 |
| Hardness Shore A 23°C, 50% r.h., | 1d | <5 | <5 | 5 | 5 |
| | 7d | 5 | 7 | 5 | <5 |
| E-modulus 0-100% (MPa) | *7d RT + 7d 50°C* | 0.16 | 0.23 | 0.15 | 0.15 |
| Tensile | | 0.49 | 0.62 | 0.48 | 0.51 |
| strength (MPa) | | | | | |
| Elongation (%) | | 897 | 948 | 933 | 931 |
| Type of failure | | Cf50/TL50 | Cf50/TL50 | Cf50/TL50 | Cf50/TL50 |
| E-modulus 0-100% (MPa) | *+ 14d 90°C* | 0.17 | 0.24 | 0.18 | 0.17 |
| Tensile strength (MPa) | | 0.45 | 0.57 | 0.37 | 0.37 |
| Elongation (%) | | 871 | 916 | 703 | 691 |
| Type of failure | | Cf50/TL50 | Cf70/TL30 | Cf70/TL30 | Cf50/TL50 |

The variation of the catalyst concentration (tin and amine catalyst) has an influence on the curing behavior, but all example formulations pass the durability test.

## Claims

1. Two-component composition comprising
a) a first component A comprising
at least one polymer **P** obtained by the reaction of m equivalents of a secondary aminosilane endcapper **E** according to formula (I) with one equivalent of an isocyanate-functional polyurethane polymer **PUR** having m isocyanate groups, 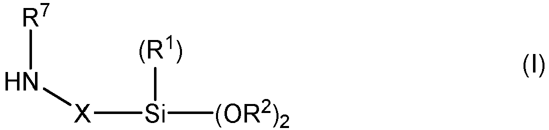 wherein
radical R¹ represents a linear or branched monovalent hydrocarbon radical having 1 to 5 carbon atoms and which optionally contains one or more C-C-multiple bonds, and/or cycloaliphatic, and/or aromatic moieties;
radical R² represents an acyl radical or a linear or branched monovalent hydrocarbon radical having 1 to 5 carbon atoms and which optionally contains one or more C-C-multiple bonds, and/or cycloaliphatic, and/or aromatic moieties;
radical R⁷ represents a linear or branched monovalent hydrocarbon radical having 1 to 20 carbon atoms and which optionally contains one or more heteroatoms and/or C-C-multiple bonds, and/or cycloaliphatic, and/or aromatic moieties;
X represents a linear or branched monovalent hydrocarbon radical having 1 to 6 carbon atoms and which optionally contains one or more heteroatoms and optionally one or more C-C-multiple bonds, and/or cycloaliphatic, and/or aromatic moieties;
m stands for a value of 1 to 4, preferably 2 or 3; and
b) a second component B comprising a catalyst system for catalyzing hydrolysis and/or condensation of silanes;
wherein component A and component B are produced and stored separately and preferably mixed shortly prior to application, and wherein said secondary aminosilane endcapper **E** is obtained by the reaction of an aminosilane **AS** according to formula (II) with a Michael acceptor **M** according to formula (III) or (IIIa) 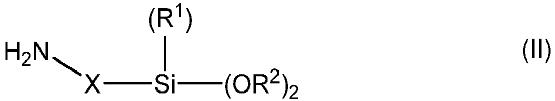 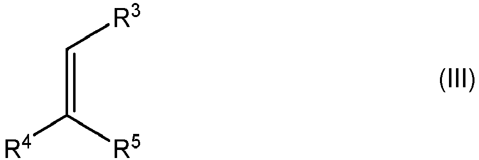 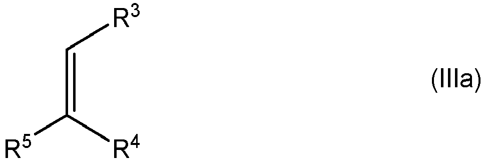 wherein
radical R³ and radical R⁵ both represent an alkyl carboxylate group, preferably a methyl or ethyl carboxylate group;
radical R⁴ represents a hydrogen radical or a radical selected from the group -R⁶, -COOR⁶, -CN, or -NO₂;
radical R⁶ represents a linear or branched monovalent hydrocarbon radical having 1 to 20 carbon atoms.

2. Two-component composition according claim 1, wherein X represents a methylene, n-propylene, 3-aza-n-hexylene, or 3-aza-n-pentylene group, preferably a n-propylene group or a 3-aza-n-hexylene group.

3. Two-component composition according to any of claims 1 or 2, wherein said isocyanate-functional polyurethane polymer **PUR** consists of a reaction product of at least one polyol and at least one polyisocyanate wherein said polyisocyanate is employed in molar excess and is preferably an aliphatic polyisocyanate and/or said polyol is preferably a polyether polyol and the reaction of polyol and polyisocyanate is performed without a tin catalyst.

4. Two-component composition according to any of claims 1 to 3, wherein said catalyst system in component B comprises a tin compound and preferably additionally an amine compound.

5. Two-component composition according to any of claims 1 to 4, wherein component A and/or component B comprise undried calcium carbonate, preferably with a water content of between 0.01 wt.-% and 1.5 wt.-%, preferably between 0.05 wt.-% and 1 wt.-% of water, based on the weight of the calcium carbonate.

6. Two-component composition according to any of claims 1 to 5, wherein the cured composition passes the durability test according to Japanese industrial standard JIS A 5758:2010 and reaches classification 9030.

7. Method of manufacturing a polymer P suitable to be used in a two-component composition according to any of claims 1 to 6, comprising the steps:
(i) the reaction of an aminosilane **AS** according to formula (II) with a Michael acceptor **M** according to formula (III) or (IIIa), followed by
(ii) the reaction of m equivalents of the product of (i) with one equivalent of an isocyanate-functional polyurethane polymer **PUR** having m isocyanate groups 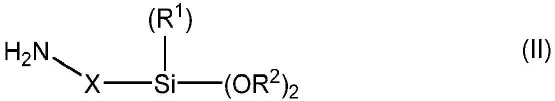 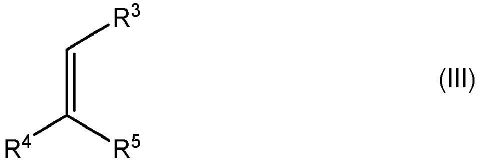 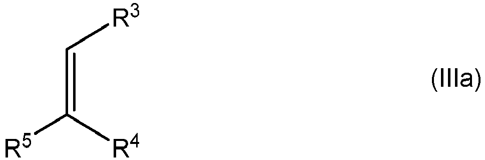 wherein radicals R¹, R², R³, R⁴, R⁵, R⁶, X and m have the meaning as described in claim 1.

8. Method of manufacturing a polymer **P** according to claim 7, wherein aminosilane **AS** is 3-Aminopropyl methyl dimethoxysilane or N-Aminoethyl-3-aminopropyl methyl dimethoxysilane and Michael acceptor **M** is a maleic acid alkyl ester or an acrylic acid alkyl ester.

9. Product obtained by a method of manufacturing according to claim 7 or 8.

10. Two-component composition according to any of claims 1 to 6, wherein component A comprises between 15 wt.-% and 40 wt.-%, preferably between 20 wt.-% and 35 wt.-%, based on the total weight of component A, of at least one polymer **P,** and between 20 wt.-% and 40 wt.-%, based on the total weight of component A, of undried calcium carbonate, and between 0.5 wt.-% and 5 wt.-%, based on the total weight of component A, of hollow microspheres, and wherein component B comprises between 2 wt.-% and 20 wt.-%, preferably between 3 wt.-% and 15 wt.-%, based on the total weight of component B, of a tin compound and between 0 wt.% and 10 wt.-%, preferably between 4 wt.-% and 8 wt.-%, based on the total weight of component B, of an amine compound and between 45 wt.% and 65 wt.-%, preferably between 50 wt.-% and 60 wt.-%, based on the total weight of component B, of undried calcium carbonate.

11. Two-component composition according to claim 10, wherein said tin compound in component B comprises a tin carboxylate complex, preferably tin octoate and wherein said amine compound in component B comprises a linear or branched monoalkylamine, preferably n-dodecyl amine.

12. Use of a two-component composition according to any of claims 1 to 6 or 10 to 11 as sealant or adhesive, preferably as joint sealant.

13. Cured or curing two-component composition according to any of claims 1 to 6 or 10 to 11, obtained by mixing of component A and component B using a static or dynamic mixing system and applying the mixture to a substrate, preferably a joint.

## Patentansprüche

1. Zweikomponentige Zusammensetzung, umfassend
a) eine erste Komponente A, umfassend mindestens ein Polymer **P,** erhalten durch Umsetzung von m Äquivalenten eines sekundären Aminosilan-Endgruppenverschlussmittels **E** gemäß Formel (I) mit einem Äquivalent eines isocyanatfunktionellen Polyurethanpolymers **PUR** mit m Isocyanatgruppen, 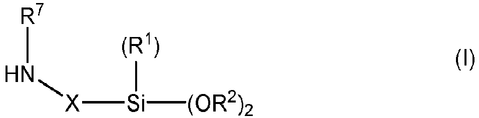 wobei
der Rest R¹ für einen linearen oder verzweigten einwertigen Kohlenwasserstoffrest mit 1-5 Kohlenstoffatomen, der gegebenenfalls eine oder mehrere C-C-Mehrfachbindungen und/oder cycloaliphatische und/oder aromatische Anteile aufweist, steht;
der Rest R² für einen Acylrest oder einen linearen oder verzweigten einwertigen Kohlenwasserstoffrest mit 1 bis 5 Kohlenstoffatomen, der gegebenenfalls eine oder mehrere C-C-Mehrfachbindungen und/oder cycloaliphatische und/oder aromatische Anteile enthält, steht;
der Rest R⁷ für einen linearen oder verzweigten einwertigen Kohlenwasserstoffrest mit 1 bis 20 Kohlenstoffatomen, der gegebenenfalls eine oder mehrere C-C-Mehrfachbindungen und/oder cycloaliphatische und/oder aromatische Anteile enthält, steht;
X für einen linearen oder verzweigten einwertigen Kohlenwasserstoffrest mit 1 bis 6 Kohlenstoffatomen, der gegebenenfalls ein oder mehrere Heteroatome und gegebenenfalls eine oder mehrere C-C-Mehrfachbindungen und/oder cycloaliphatische und/oder aromatische Anteile enthält, steht;
m für einen Wert von 1 bis 4, vorzugsweise 2 oder 3, steht;
und
b) eine zweite Komponente B, umfassend ein Katalysatorsystem zur Katalyse der Hydrolyse und/oder Kondensation von Silanen;
wobei Komponente A und Komponente B separat hergestellt und aufbewahrt werden und vorzugsweise kurz vor der Anwendung gemischt werden und wobei das sekundäre Aminosilan-Endgruppenverschlussmittel **E** durch die Umsetzung eines Aminosilans **AS** gemäß Formel (II) mit einem Michael-Akzeptor M gemäß Formel (III) oder (IIIA) erhalten wird: 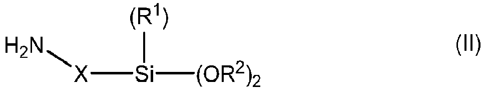 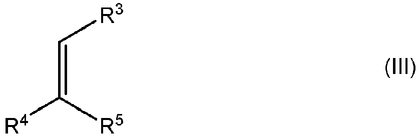 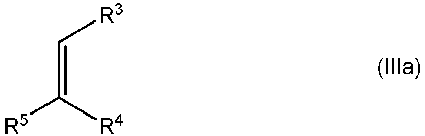 wobei
der Rest R³ und der Rest R⁵ beide für eine Alkylcarboxylatgruppe, vorzugsweise eine Methyl- oder Ethylcarboxylatgruppe, stehen;
der Rest R⁴ für einen Wasserstoffrest oder einen Rest aus der Gruppe -R⁶, -COOR⁶, -CN oder -NO₂ steht;
der Rest R⁶ für einen linearen oder verzweigten einwertigen Kohlenwasserstoffrest mit 1 bis 20 Kohlenstoffatomen steht.

2. Zweikomponentige Zusammensetzung nach Anspruch 1, wobei X für eine Methylen-, n-Propylen-, 3-Aza-n-hexylen- oder eine 3-Aza-n-pentylengruppe, vorzugsweise eine n-Propylen- oder 3-Aza-n-hexylengruppe, steht.

3. Zweikomponentige Zusammensetzung nach Anspruch 1 oder 2, wobei das isocyanatfunktionelle Polyurethanpolymer **PUR** aus einem Reaktionsprodukt von mindestens einem Polyol und mindestens einem Polyisocyanat besteht, wobei das Polyisocyanat in molarem Überschuss eingesetzt wird und vorzugsweise ein aliphatisches Polyisocyanat ist und/oder das Polyol vorzugsweise ein Polyetherpolyol ist und die Umsetzung von Polyol und Polyisocyanat ohne Zinnkatalysator durchgeführt wird.

4. Zweikomponentige Zusammensetzung nach einem der Ansprüche 1 bis 3, wobei das Katalysatorsystem in Komponente B eine Zinnverbindung und vorzugsweise zusätzlich eine Aminverbindung umfasst.

5. Zweikomponentige Zusammensetzung nach einem der Ansprüche 1 bis 4, wobei Komponente A und/oder Komponente B ungetrocknetes Calciumcarbonat, vorzugsweise mit einem Wassergehalt zwischen 0,01 Gew.-% und 1,5 Gew.-%, vorzugsweise zwischen 0,05 Gew.-% und 1 Gew.-% Wasser, bezogen auf das Gewicht des Calciumcarbonats, umfasst.

6. Zweikomponentige Zusammensetzung nach einem der Ansprüche 1 bis 5, wobei die gehärtete Zusammensetzung die Dauerhaftigkeitsprüfung gemäß der Japanischen Industrienorm JIS A 5758:2010 besteht und die Klassifikation 9030 erreicht.

7. Verfahren zur Herstellung eines Polymers P, das zur Verwendung in einer zweikomponentigen Zusammensetzung nach einem der Ansprüche 1 bis 6 geeignet ist, wobei das Verfahren folgende Schritte umfasst:
(i) die Umsetzung eines Aminosilans **AS** gemäß Formel (II) mit einem Michael-Akzeptor M gemäß Formel (III) oder (IIIa), danach
(ii) die Umsetzung von m Äquivalenten des Produkts von (i) mit einem Äquivalent eines isocyanatfunktionellen Polyurethanpolymers **PUR** mit m Isocyanatgruppen, 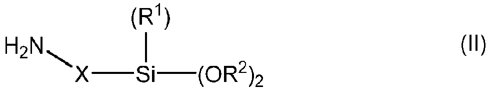 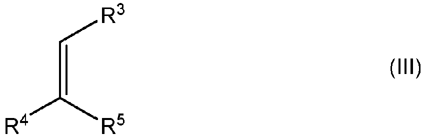 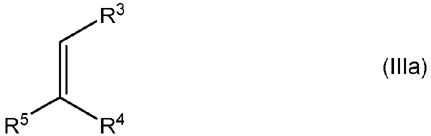 wobei die Reste R¹, R², R³, R⁴, R⁵, R⁶, X und m die wie in Anspruch 1 beschriebene Bedeutung haben.

8. Verfahren zur Herstellung eines Polymers **P** nach Anspruch 7, wobei es sich bei dem Aminosilan **AS** um 3-Aminopropylmethyldimethoxysilan oder N-Aminoethyl-3-aminopropylmethyldimethoxysilan handelt und es sich bei dem Michael-Akzeptor **M** um einen Maleinsäurealkylester oder einen Acrylsäurealkylester handelt.

9. Produkt, erhalten durch ein Herstellungsverfahren nach Anspruch 7 oder 8.

10. Zweikomponentige Zusammensetzung nach einem der Ansprüche 1 bis 6, wobei Komponente A zwischen 15 Gew.-% und 40 Gew.-%, vorzugsweise zwischen 20 Gew.-% und 35 Gew.-%, bezogen auf das Gesamtgewicht von Komponente A, mindestens eines Polymers **P** und zwischen 20 Gew.-% und 40 Gew.-%, bezogen auf das Gesamtgewicht von Komponente A, ungetrocknetes Calciumcarbonat und zwischen 0,5 Gew.-% und 5 Gew.-%, bezogen auf das Gesamtgewicht von Komponente A, Mikrohohlkugeln, umfasst und Komponente B zwischen 2 Gew.-% und 20 Gew.-%, vorzugsweise zwischen 3 Gew.-% und 15 Gew.-%, bezogen auf das Gesamtgewicht von Komponente B, einer Zinnverbindung und zwischen 0 Gew.-% und 10 Gew.-%, vorzugsweise zwischen 4 Gew.-% und 8 Gew.%, bezogen auf das Gesamtgewicht von Komponente B, einer Aminverbindung und zwischen 45 Gew.-% und 65 Gew.-%, vorzugsweise zwischen 50 Gew.-% und 60 Gew.-%, bezogen auf das Gesamtgewicht von Komponente B, ungetrocknetes Calciumcarbonat umfasst.

11. Zweikomponentige Zusammensetzung nach Anspruch 10, wobei die Zinnverbindung in Komponente B einen Zinncarboxylatkomplex, vorzugsweise Zinnoctoat, umfasst und wobei die Aminverbindung in Komponente B ein lineares oder verzweigtes Monoalkylamin, vorzugsweise n-Dodecylamin, umfasst.

12. Verwendung einer zweikomponentigen Zusammensetzung nach einem der Ansprüche 1 bis 6 oder 10 bis 11 als Dichtstoff oder Klebstoff, vorzugsweise als Fugendichtstoff.

13. Gehärtete oder härtende zweikomponentige Zusammensetzung nach einem der Ansprüche 1 bis 6 oder 10 bis 11, erhalten durch Mischen von Komponente A und Komponente B unter Verwendung eines statischen oder dynamischen Mischsystems und Aufbringen der Mischung auf ein Substrat, vorzugsweise eine Fuge.

## Revendications

1. Composition à deux composants comprenant
a) un premier composant A comprenant au moins un polymère **P** obtenu par la réaction de m équivalents d'un agent de coiffage terminal aminosilane secondaire **E** répondant à la formule (I) avec un équivalent d'un polymère polyuréthane à fonction isocyanate **PUR** ayant m groupes isocyanate 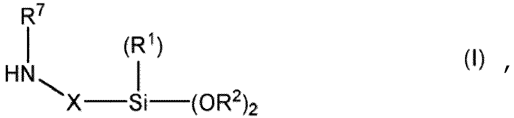 dans laquelle
le radical R¹ représente un radical hydrocarboné monovalent linéaire ou ramifié ayant 1 à 5 atomes de carbone et qui contient éventuellement une ou plusieurs liaisons C-C multiples et/ou fractions cycloaliphatiques et/ou aromatiques ;
le radical R² représente un radical acyle ou un radical hydrocarboné monovalent linéaire ou ramifié ayant 1 à 5 atomes de carbone et qui contient éventuellement une ou plusieurs liaisons C-C multiples et/ou fractions cycloaliphatiques et/ou aromatiques ;
le radical R⁷ représente un radical hydrocarboné monovalent linéaire ou ramifié ayant 1 à 20 atomes de carbone et qui contient éventuellement un ou plusieurs hétéroatomes et/ou une ou plusieurs liaisons C-C multiples et/ou fractions cycloaliphatiques et/ou aromatiques ;
X représente un radical hydrocarboné monovalent linéaire ou ramifié ayant 1 à 6 atomes de carbone et qui contient éventuellement un ou plusieurs hétéroatomes et éventuellement une ou plusieurs liaisons C-C multiples et/ou fractions cycloaliphatiques et/ou aromatiques ; m prend une valeur de 1 à 4, de préférence de 2 ou 3 ;
et
b) un second composant B comprenant un système catalyseur pour la catalyse de l'hydrolyse et/ou de la condensation de silanes ;
dans laquelle le composant A et le composant B sont produits et stockés séparément et de préférence mélangés peu de temps avant application et dans laquelle ledit agent de coiffage terminal aminosilane secondaire **E** est obtenu par la réaction d'un aminosilane **AS** répondant à la formule (II) avec un accepteur de Michael **M** répondant à la formule (III) ou (IIIa) 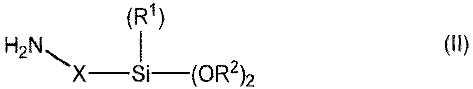 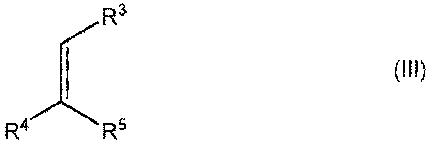 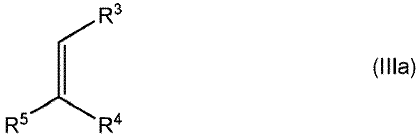 dans laquelle
le radical R³ et le radical R⁵ représentent tous deux un groupe carboxylate d'alkyle, de préférence un groupe carboxylate de méthyle ou d'éthyle ;
le radical R⁴ représente un radical hydrogène ou un radical choisi dans le groupe -R⁶, -COOR⁶, -CN ou -NO₂ ; le radical R⁶ représente un radical hydrocarboné monovalent linéaire ou ramifié ayant 1 à 20 atomes de carbone.

2. Composition à deux composants selon la revendication 1, dans laquelle X représente un groupe méthylène, *n-*propylène, 3-aza-*n*-hexylène ou 3-aza-*n*-pentylène, de préférence un groupe *n*-propylène ou un groupe 3-aza-*n-*hexylène.

3. Composition à deux composants selon l'une quelconque des revendications 1 ou 2, dans laquelle ledit polymère polyuréthane à fonction isocyanate **PUR** est constitué d'un produit réactionnel d'au moins un polyol et d'au moins un polyisocyanate, ledit polyisocyanate étant employé en excès molaire et étant de préférence un polyisocyanate aliphatique et/ou ledit polyol étant de préférence un polyol de polyéther et la réaction du polyol et du polyisocyanate étant effectuée sans un catalyseur à l'étain.

4. Composition à deux composants selon l'une quelconque des revendications 1 à 3, dans laquelle ledit système catalyseur dans le composant B comprend un composé de l'étain et de préférence de plus un composé amine.

5. Composition à deux composants selon l'une quelconque des revendications 1 à 4, dans laquelle le composant A et/ou le composant B comprennent du carbonate de calcium non séché, de préférence possédant une teneur en eau comprise entre 0,01 % en poids et 1,5 % en poids, de préférence entre 0,05 % en poids et 1 % en poids d'eau, par rapport au poids du carbonate de calcium.

6. Composition à deux composants selon l'une quelconque des revendications 1 à 5, la composition durcie passant l'essai de durabilité selon la norme industrielle japonaise JIS A 5758:2010 et atteignant une classification de 9030.

7. Procédé de fabrication d'un polymère **P** approprié pour être utilisé dans une composition à deux composants selon l'une quelconque des revendications 1 à 6, comprenant les étapes :
(i) la réaction d'un aminosilane **AS** répondant à la formule (II) avec un accepteur de Michael **M** répondant à la formule (III) ou (IIIa), suivie de
(ii) la réaction de m équivalents du produit de (i) avec un équivalent d'un polymère polyuréthane à fonction isocyanate **PUR** ayant m groupes isocyanate 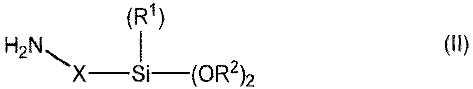 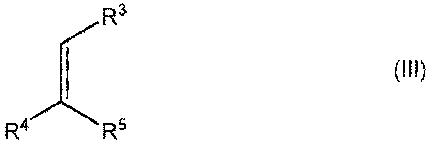 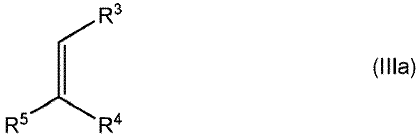 dans lequel les radicaux R¹, R², R³, R⁴, R⁵, R⁶, X et m ont la signification telle que décrite dans la revendication 1.

8. Procédé de fabrication d'un polymère **P** selon la revendication 7, dans lequel l'aminosilane **AS** est le 3-aminopropylméthyldiméthoxysilane ou le *N*-aminoéthyl-3-aminopropylméthyldiméthoxysilane et l'accepteur de Michael **M** est un ester alkylique de l'acide maléique ou un ester alkylique de l'acide acrylique.

9. Produit obtenu par un procédé de fabrication selon la revendication 7 ou 8.

10. Composition à deux composants selon l'une quelconque des revendications 1 à 6, dans laquelle le composant A comprend entre 15 % en poids et 40 % en poids, de préférence entre 20 % en poids et 35 % en poids, par rapport au poids total de composant A, d'au moins un polymère **P** et entre 20 % en poids et 40 % en poids, par rapport au poids total de composant A, de carbonate de calcium non séché et entre 0,5 % en poids et 5 % en poids, par rapport au poids total de composant A, de microsphères creuses et dans laquelle le composant B comprend entre 2 % en poids et 20 % en poids, de préférence entre 3 % en poids et 15 % en poids, par rapport au poids total de composant B, d'un composé de l'étain et entre 0 % en poids et 10 % en poids, de préférence entre 4 % en poids et 8 % en poids, par rapport au poids total de composant B, d'un composé amine et entre 45 % en poids et 65 % en poids, de préférence entre 50 % en poids et 60 % en poids, par rapport au poids total de composant B, de carbonate de calcium non séché.

11. Composition à deux composants selon la revendication 10, dans laquelle ledit composé de l'étain dans le composant B comprend un complexe carboxylate d'étain, de préférence de l'octoate d'étain et dans laquelle ledit composé amine dans le composant B comprend une monoalkylamine linéaire ou ramifiée, de préférence de la *n*-dodécylamine.

12. Utilisation d'une composition à deux composants selon l'une quelconque des revendications 1 à 6 ou 10 à 11 en tant que mastic ou adhésif, de préférence en tant que mastic à joint.

13. Composition à deux composants selon l'une quelconque des revendications 1 à 6 ou 10 à 11 durcissable ou durcie, obtenue par mélange de composant A et de composant B à l'aide d'un système de mélange statique ou dynamique et application du mélange sur un substrat, de préférence un joint.
